# EUROPÄISCHE PATENTSCHRIFT

(11) **EP 2 719 624 B1**
(45) Veröffentlichungstag und Bekanntmachung des Hinweises auf die Patenterteilung: **22.03.2017**
(21) Anmeldenummer: 12007019.8
(22) Anmeldetag: 10.10.2012
(51) Int. Cl.: G01N 21/47, F03D 80/40, F03D 17/00, B64D 15/20

(54) **Verfahren zum Betreiben einer Windenergieanlage und Windenergieanlage zur Ausführung des Verfahrens**
Method for operating a wind turbine and wind turbine for implementing the method
Procédé d'exploitation d'une éolienne et éolienne destinée à l'exécution du procédé

(43) Veröffentlichungstag der Anmeldung: 16.04.2014
(73) Patentinhaber: Nordex Energy GmbH, 22419 Hamburg (DE)
(72) Erfinder: Tode, Siegfried, 20251 Hamburg (DE)
(74) Vertreter: Hauck Patentanwaltspartnerschaft mbB

(56) Entgegenhaltungen:
- DE-A1-102006 032 387
- US-A1- 2006 018 752
- US-A1- 2012 207 589
- "OPTICAL DETECTION OF ICE ON A HELICOPTER ROTOR", NTIS TECH NOTES, US DEPARTMENT OF COMMERCE. SPRINGFIELD, VA, US, 1. August 1992 (1992-08-01), Seite 616, XP000325353, ISSN: 0889-8464

## Beschreibung

Die Erfindung betrifft ein Verfahren zum Betreiben einer Windenergieanlage, bei dem eine Vereisungsgefahr ermittelt wird, sowie eine Windenergieanlage mit einer Lichtquelle, einem Lichtdetektor und einer mit dem Lichtdetektor verbundenen Steuerung.

An einigen Standorten von Windenergieanlagen kommt es aufgrund von hoher Luftfeuchtigkeit oder Niederschlag bei Temperaturen um den Gefrierpunkt immer wieder zu einer Vereisung von Komponenten der Windenergieanlage, insbesondere der Rotorblätter. Eine solche Vereisung kann den Betrieb der Windenergieanlage beeinträchtigen, insbesondere die aerodynamische Leistungsfähigkeit der Rotorblätter mindern. Über entsprechende Ertragseinbußen hinaus können aerodynamische Unwuchten resultieren, die die Lebensdauer von Komponenten verringern können.

Somit kann durch eine wirksame Enteisung die Lebensdauer und Effizienz einer Windenergieanlage an Standorten erhöht werden, an denen es zu einer Vereisung kommt. Insbesondere zur Enteisung von Rotorblättern können aktive und passive Enteisungssysteme eingesetzt werden. Aktive Enteisungssysteme weisen eine insbesondere elektrisch betriebene Heizeinrichtung auf. Eine solche Heizeinrichtung ist beispielsweise aus der Druckschrift WO 98/53200 A1 bekannt geworden.

Um aktive Enteisungssysteme zielgenau und ohne übermäßigen Energieverbrauch einsetzen zu können, ist es von entscheidender Bedeutung, eine beginnende Eisbildung oder eine Vereisungsgefahr rechtzeitig zu erkennen. Hierzu ist es aus der Druckschrift US 2011/0089692 A1 bekannt geworden, in der Umgebung einer Windenergieanlage die meteorologischen Daten Temperatur, relative Luftfeuchtigkeit und Sonneneinstrahlung zu messen und auf dieser Grundlage eine Vereisungswahrscheinlichkeit zu ermitteln. Bei dem bekannten Verfahren wird außerdem überwacht, ob die Windenergieanlage einen bei der jeweiligen Windgeschwindigkeit erwarteten Leistungswert erreicht. In Abhängigkeit von Leistungsabweichungen und der ermittelten Vereisungsgefahr kann die Windenergieanlage abgeschaltet werden.

Aus Viktor Carlsson: "Measuring routines of ice accretion for Wind Turbine applications", Master Thesis, Master of Science programme in Engineering Physics, 180 hp, Umeä Universitet, Skellefteä Kraft ist bekannt geworden, eine bereits entstandene Vereisung in der Nähe der Windkraftanlage auf Basis eines Vergleichs der Messergebnisse eines beheizten und unbeheizten Windmessers zu erkennen. Die Arbeit beschreibt auch das Problem einer Vereisung der Rotorblätter innerhalb von Wolken und in diesem Zusammenhang die Möglichkeit einer Bestimmung der Wolkenhöhe (cloud base hight) auf Grundlage einer Laufzeitmessung des von der Wolkendecke rückgestreuten Lichts eines Lasers. Diese Art der Wolkenhöhenmessung ist auch unter der Abkürzung LIDAR (*light detection and ranging*) bekannt.

Aus der Druckschrift WO 2011/048024 ist bekannt geworden, bei Windenergieanlagen eine Abstandsmessung der Rotorblätter mit optischen Sensoren vorzunehmen, um unsymmetrische Belastungen der Rotorblätter zu erkennen und die Azimutposition der Windenergieanlage und/oder den Anstellwinkel einzelner Rotorblätter entsprechend zu korrigieren.

Aus der Druckschrift US 2012/0207589 A1 ist ein Verfahren zum Erkennen von Eis auf einer Oberfläche eines Windenergieanlagenrotorblatts bekannt geworden. Bei dem bekannten Verfahren werden die Intensitäten von an der Oberfläche diffus reflektiertem und gespiegeltem Licht ausgewertet. Die Unterscheidung zwischen diffuser Reflexion und Spiegelung erfolgt mit Hilfe eines Polarisationsfilters.

Davon ausgehend ist es die Aufgabe der Erfindung, ein Verfahren zum Betreiben einer Windenergieanlage zur Verfügung zu stellen, mit dem eine Vereisungsgefahr einfach und genau ermittelt werden kann.

Diese Aufgabe wird gelöst durch ein Verfahren zum Betreiben einer Windenergieanlage, die einen Rotor mit mindestens einem eine Rotorfläche überstreichenden Rotorblatt aufweist, mit den im Anspruch 1 angegebenen Schritten. Vorteilhafte Ausgestaltungen des Verfahrens sind in den sich anschließenden Unteransprüchen angegeben.

Das Verfahren weist die folgenden Schritte auf:
- Richten eines Beleuchtungsstrahls auf die Rotorfläche,
- Erfassen von Lichtintensitäten von zurückgeworfenen Anteilen des Beleuchtungsstrahls, wobei eine erste Lichtintensität von dem mindestens einen Rotorblatt zurückgeworfenes Licht umfasst und eine zweite Lichtintensität kein von dem mindestens einen Rotorblatt zurückgeworfenes Licht umfasst,
- Ermitteln einer Vereisungsgefahr auf Grundlage der erfassten Lichtintensitäten.

Der Beleuchtungsstrahl wird von einer Lichtquelle ausgesendet. Dass er auf die Rotorfläche gerichtet ist, bedeutet, dass das Licht des Beleuchtungsstrahls einen Bereich beleuchtet, der zumindest teilweise in der Rotorfläche liegt. Der beleuchtete Bereich kann mehr oder weniger punktförmig sein, aber auch relativ großflächig. Insbesondere kann der beleuchtete Bereich so bemessen sein, dass er vollständig innerhalb der Projektion eines Rotorblatts auf die Rotorfläche zu dem Zeitpunkt liegt, zu dem sich das Rotorblatt während seiner Rotation gerade an der Position des beleuchteten Bereichs befindet. In diesem Fall gibt es Zeitpunkte, zu denen der gesamte Beleuchtungsstrahl oder zumindest ein auf die Rotorfläche treffender Anteil des Beleuchtungsstrahls vollständig auf ein Rotorblatt trifft.

Das Erfassen der Lichtintensitäten erfolgt zum Beispiel mit einem Lichtdetektor. Damit, dass zurückgeworfene Anteile des Beleuchtungsstrahls erfasst werden, ist gemeint, dass nicht die Intensität des Beleuchtungsstrahls selbst erfasst wird, sondern nur diejenigen Anteile, die zuvor auf innerhalb des Beleuchtungsstrahls befindliche Gegenstände oder Partikel, insbesondere auf ein Rotorblatt, Wassertröpfchen und/oder Schneeflocken, aufgetroffen und von diesen zurückgeworfen worden sind, insbesondere in im Wesentlichen entgegen gesetzter Richtung zu dem Beleuchtungsstrahl. Der dem Zurückwerfen zugrunde liegende physikalische Vorgang kann insbesondere eine Streuung oder eine Reflexion oder eine Mischung daraus sein.

Bei dem erfindungsgemäßen Verfahren werden Lichtintensitäten verwendet, die zwei unterschiedlichen Situationen entsprechen. Die erste Lichtintensität entspricht derjenigen Situation, in der der Beleuchtungsstrahl ganz oder teilweise auf ein Rotorblatt auftrifft und mindestens ein Teil des Beleuchtungsstrahls von dem Rotorblatt zurückgeworfen wird. Dieser ist in der ersten Lichtintensität enthalten, soweit er auf dem "Rückweg" vom Rotorblatt zum Ort der Erfassung nicht geschwächt wird. Hinzu kommen diejenigen Anteile des Beleuchtungsstrahls, die schon vor dem Auftreffen auf das Rotorblatt zurückgeworfen werden, z.B. durch Streuung an Wassertröpfchen.

Die zweite Lichtintensität entspricht derjenigen Situation, in der sich das Rotorblatt nicht in dem Bereich befindet, auf den der Beleuchtungsstrahl auftrifft, und/oder nicht in einem Bereich, auf den ein zur Erfassung verwendeter Lichtdetektor ausgerichtet ist. In dieser Situation werden nur diejenigen Anteile des Beleuchtungsstrahls erfasst, die an vom Rotorblatt verschiedenen Partikeln/Tröpfchen oder sonstigen Strukturen zurückgeworfen werden. Dieses Zurückwerfen kann gleichermaßen vor oder hinter der Rotorfläche erfolgen. Es kommt zustande durch eine Trübung der Luft, insbesondere durch Wassertröpfchen und/oder Schneefall.

Somit ist die erste Lichtintensität vom Rotorblatt beeinflusst und die zweite Lichtintensität nicht. Die zweite Lichtintensität ist in der Regel geringer als die erste Lichtintensität. Unter bestimmten Bedingungen können beide Intensitäten annähernd gleich groß sein, etwa bei starkem Schneefall.

Die erste und zweite Lichtintensität können zu gleichen oder zu unterschiedlichen Zeitpunkten erfasst werden. Insbesondere kann mit einem einzigen Beleuchtungsstrahl und einem einzigen Lichtdetektor gearbeitet werden. In diesem Fall müssen die beiden Lichtintensitäten nacheinander erfasst werden. Durch die Bewegung des Rotorblatts durch den beleuchteten Bereich hindurch kommt es zu einem fortlaufenden Wechsel der Beleuchtungssituation.

Alternativ kann die Erfassung der beiden Lichtintensitäten für räumlich getrennte Bereiche der Rotorfläche durchgeführt werden. Dies kann wahlweise gleichzeitig geschehen. Zum Beispiel können Bereiche der Rotorfläche beleuchtet werden, in denen sich zu einem bestimmten Zeitpunkt ein Rotorblatt befindet und ein davon verschiedener Bereich der Rotorfläche, in dem sich kein Rotorblatt befindet. Die Bereiche können voneinander beabstandet sein, etwa bei Verwendung von zwei Beleuchtungsstrahlen. Sie können auch eine zusammenhängende Fläche innerhalb der Rotorfläche bilden, die sich über die Abmessungen eines darin angeordneten Rotorblatts hinaus erstreckt. In ähnlicher Weise und gegebenenfalls in Kombination damit können auch die Detektionsbereiche eines oder mehrerer Lichtdetektoren so fokussiert oder eingegrenzt werden, dass die Erfassung der beiden Lichtintensitäten für räumlich voneinander getrennte Bereiche der Rotorfläche ausgeführt werden kann.

In diesen Fällen ist eine gleichzeitige Erfassung der ersten und der zweiten Lichtintensitäten ohne weiteres möglich.

Bei der Erfindung wird eine Vereisungsgefahr ermittelt. Die Vereisungsgefahr ist ein Maß dafür, ob mit einer Vereisung der Windenergieanlage zu rechnen ist. Es kann sich bei der Vereisungsgefahr um eine einfache ja/nein-Information handeln oder um eine quantitative Größe, die einer Wahrscheinlichkeit für eine Vereisung entspricht. Im letztgenannten Fall können mit der Ermittlung einer Vereisungsgefahr verbundene Schritte, wie beispielsweise das Inbetriebnehmen einer Heizung, an das Überschreiten eines bestimmten Wahrscheinlichkeitswerts geknüpft sein.

Die Erfindung bietet eine besonders einfache Möglichkeit, die Vereisungsgefahr zu ermitteln. Dabei fließt in die Auswertung ein, wie sich die zurückgeworfenen Anteile der Lichtintensität "mit und ohne" Rotorblatt verhalten. Insbesondere der unabhängig vom Rotorblatt zurückgeworfene Anteil der Lichtintensität, also die zweiten Lichtintensität, wird entscheidend von den Wetterbedingungen, insbesondere von der Trübung der Luft zum Beispiel durch Wassertröpfchen, Schneeflocken, usw., beeinflusst. Durch die zusätzliche Berücksichtigung der ersten Lichtintensität wird die Analyse in einfacher Weise auf die Situation in einer Umgebung des Rotorblatts bezogen. Die erhaltenen Messwerte sind wegen dieses unmittelbaren räumlichen Bezugs zum Ort des Rotors besonders aussagekräftig.

Im Gegensatz zu den bekannten LIDAR-Verfahren kann das Verfahren der Erfindung mit relativ einfachen Messgeräten ausgeführt werden. Hierzu trägt bei, dass lediglich Lichtintensitäten, nicht Laufzeiten, ausgewertet werden müssen.

In einer Ausgestaltung ist der Beleuchtungsstrahl auf einen Bereich der Rotorfläche gerichtet, der weniger als ein Viertel des Rotordurchmessers unterhalb eines höchsten Punkts der Rotorfläche angeordnet ist. Der Bereich kann auch in einem vertikalen Abstand von weniger als ein Achtel des Rotordurchmessers oder von weniger als 5 m oder von weniger als 1 m unterhalb des höchsten Punkts angeordnet sein. Dadurch kann eine Vereisungsgefahr durch "in cloud-icing" frühzeitig erkannt werden, weil ein Absinken der Wolkendecke bis auf den höchstgelegenen Bereich der Rotorfläche zuverlässig detektiert und von nur geringfügig höher gelegenen und daher weniger kritischen Wolkendecken unterschieden werden kann.

In einer Ausgestaltung strahlt der Beleuchtungsstrahl Licht nur in einem Spektralbereich mit einer Bandbreite von 200 nm oder weniger und/oder mit Wellenlängen außerhalb des sichtbaren Bereichs aus und/oder es werden nur Lichtintensitäten in einem Spektralbereich mit einer Bandbreite von 200 nm oder weniger und/oder mit Wellenlängen außerhalb des sichtbaren Bereichs erfasst. Die Bandbreite kann auch nur 100 nm oder weniger oder 50 nm oder weniger betragen. Emission und Erfassung erfolgen bevorzugt im selben Spektralbereich. Der Spektralbereich außerhalb des sichtbaren Bereichs kann zum Beispiel im UV-Bereich liegen, oder im IR-Bereich, insbesondere im sogenannten augensicheren Bereich von ungefähr 1,5 µm bis 2 µm. Es können auch mehrere Spektralbereiche zugleich herangezogen werden, sowohl für die Emission als auch die Erfassung des Lichts. Für das Aussenden des Lichts können insbesondere Lichtquellen verwendet werden, deren Emission auf den jeweiligen Spektralbereich beschränkt ist. Für die Erfassung des zurückgeworfenen Lichts kommt neben Lichtdetektoren mit entsprechender spektraler Empfindlichkeit auch die Verwendung von Filtern, zum Beispiel Bandpass-, Notch- oder Kantenfiltern, in Betracht. Durch diese Maßnahmen können Störeinflüsse durch andere Lichtquellen verringert werden. Auch kann dadurch eine Störung des Umfelds vermieden werden, z.B. werden Menschen nicht geblendet.

In einer Ausgestaltung ist der Beleuchtungsstrahl kegelförmig. Der Kegel kann einen Öffnungswinkel von beispielsweise 10° oder weniger, 5° oder weniger, 1 oder weniger oder 0,1° oder weniger aufweisen. Hierzu kann das Licht einer beliebigen Lichtquelle, insbesondere eines Lasers, mit einer strahlformenden Optik modifiziert, insbesondere aufgefächert oder fokussiert, werden. Dadurch wird ein definierter Beleuchtungsbereich erzeugt. Ebenfalls möglich ist die Verwendung einer Optik oder eines Kollimators für die Erfassung des zurückgeworfenen Lichts, die den Detektionsbereich eines Lichtdetektors im Wesentlichen auf den beleuchteten Bereich konzentriert. Beispielsweise kann eine Beschränkung des Öffnungswinkels des Detektionsbereichs auf 10° oder weniger, 5° oder weniger, 1° oder weniger oder 0,1° oder weniger sinnvoll sein.

In einer Ausgestaltung wird die erste Lichtintensität durch diffuse Rückstreuung und/oder Reflexion des Lichts des Beleuchtungsstrahls an einer Oberfläche des mindestens einen Rotorblatts hervorgerufen, wobei die Oberfläche von den benachbarten Oberflächen des mindestens einen Rotorblatts abweichende optische Eigenschaften aufweist. Dadurch ist es möglich, das Messverfahren noch zuverlässiger/robuster auszugestalten, da die erste Lichtintensität innerhalb bestimmter Grenzen für das Messverfahren optimiert werden kann und unabhängig von den generellen optischen Eigenschaften der Oberfläche des Rotorblattes ist. Zum Beispiel durch einen Spiegel kann die erste Lichtintensität wesentlich erhöht werden. Auch kann an der Oberfläche oder in die Oberfläche eine Fresneloptik, ein Retroreflektor oder eine optisches Gitter angeordnet oder integriert werden. Auch durch lokale Veränderung der Oberflächenzusammensetzung oder -färbung des Rotorblattes können die abweichenden optischen Eigenschaften erzielt werden, wobei die aerodynamischen Eigenschaften des Rotorblatts im wesentlichen unverändert bleiben können. Möglich ist auch eine Aufrauhung der Oberfläche oder eine Modifikation der Geometrie der Rotorblattoberfläche im Bereich der Oberfläche mit den besonderen optischen Eigenschaften.

In einer Ausgestaltung wird das von dem mindestens einen Rotorblatt zurückgeworfene Licht durch diffuse Rückstreuung des Beleuchtungsstrahls an einer Oberfläche des mindestens einen Rotorblatts hervorgerufen. Dabei kann es sich um eine Oberfläche handeln, die sich nicht von den angrenzenden Rotorblattoberflächen unterscheidet. In diesem Fall sind auf Seiten des Rotorblatts keine Veränderungen gegenüber einer herkömmlichen Windenergieanlage erforderlich. Alternativ kann es sich um eine zur Erzielung stärkerer Rückstreuung modifizierte, insbesondere aufgeraute Oberfläche, handeln. In jedem Fall vermeidet eine Beschränkung auf diffuse Rückstreuung am Rotorblatt Schwierigkeiten bei der Ausrichtung der Oberfläche in Bezug auf Lichtquelle und Lichtdetektor.

In einer Ausgestaltung werden die Lichtintensitäten kontinuierlich erfasst und zur Auswertung in einen zeitlich konstanten Anteil und ein periodischen Anteil zerlegt. Dadurch kann das erhaltene Signal mit einfachen Mitteln ausgewertet und einer Steuerung zugeführt werden.

In einer Ausgestaltung wird bei der Zerlegung in den zeitlich konstanten Anteil und den periodischen Anteil eine Rotordrehzahl und/oder ein Rotordrehwinkel berücksichtigt. Dadurch kann insbesondere in einem Lock-in-Verfahren auch bei stark verrauschten Signalen der periodische Anteil wirksam herausgefiltert werden. Die herauszufilternde Frequenz kann insbesondere der aktuellen Rotordrehzahl multipliziert mit der Anzahl der Rotorblätter des Rotors entsprechen. Wird alternativ oder zusätzlich der Rotordrehwinkel berücksichtigt, können auch diejenigen Signale herausgefiltert werden, die die "richtige" Phasenlage aufweisen.

In einer Ausgestaltung wird die Vereisungsgefahr bestimmt auf Grundlage des Verhältnisses zwischen der Amplitude des periodischen Anteils und dem Betrag des zeitlich konstanten Anteils. Diese Auswertung des Signals ermöglicht eine besonders Bestimmung einer Vereisungsgefahr. Je kleiner das Verhältnis ist, desto mehr Licht wird unabhängig vom Rotorblatt zurückgeworfen, d.h. desto höher ist die Trübung der Luft insbesondere durch Wassertröpfchen oder Schnee.

In einer Ausgestaltung wird eine Außenlufttemperatur, eine lokale Oberflächentemperatur einer Komponente der Windenergieanlage, eine Temperatur innerhalb des mindestens einen Rotorblatts, eine Temperatur in einer Gondel der Windenergieanlage, eine Temperatur in einer Nabe der Windenergieanlage, eine Temperatur in einem Turm der Windenergieanlage, eine Luftfeuchte, ein Taupunkt, ein Frostpunkt, eine Sichtweite, eine Wolkenhöhe und/oder ein Luftdruck zur Ermittlung der Vereisungsgefahr zumindest eines Teiles der Windenergieanlage berücksichtigt. Diese weiteren Größen in ihrer Zusammenschau mit dem erfindungsgemäßen Verfahren ermöglichen eine noch genauere Bestimmung einer Vereisungsgefahr. Grundsätzlich kann eine für das Ermitteln der Vereisungsgefahr berücksichtigte Temperatur auch in einer Umgebung der Windenergieanlage gemessen werden, beispielsweise in einer Wetterstation auf dem Boden oder an einer Gondel der Windenergieanlage. Das Erfassen einer lokalen Temperatur in der Nähe der Komponente, deren Vereisungsgefahr ermittelt werden soll, kann jedoch zu genaueren Ergebnissen führen, insbesondere weil lokale Temperaturänderungen aufgrund des Betriebs der Windenergieanlage berücksichtigt werden. Beispielsweise kann die Vereisungsgefahr von Komponenten nahe eines Maschinenhauses der Windenergieanlage durch Wärmeentwicklung vom Generator oder vom Getriebe herabgesetzt sein. Insbesondere im Bereich der Rotorblätter kommt es hingegen aufgrund von Unterdruckbildung durch die Umströmung der Rotorblätter in der Regel zu deutlich geringeren Temperaturen, als in einem größeren Abstand der Rotorblätter. Eine Messung dieser lokalen Temperatur berücksichtigt derartige Effekte. Weitere berücksichtigte meteorologische Daten, etwa eine absolute oder relative Luftfeuchtigkeit oder auch die Sichtweite, können bevorzugt an einem zentralen Ort erfasst werden. Das Erfassen der Oberflächentemperatur kann beispielsweise mit einem Temperatursensor erfolgen, der in unmittelbarem, thermischen Kontakt mit der Oberfläche steht. In bestimmten Situationen kann die lokale Oberflächentemperatur von der Lufttemperatur selbst in unmittelbarer Nähe der Oberfläche abweichen, beispielsweise bei starker Sonneneinstrahlung. Für einen Ansatz von Eis an der Oberfläche ist die Oberflächentemperatur maßgeblich, sodass durch deren Erfassung die Ermittlung der Vereisungsgefahr besonders präzise erfolgen kann.

In einer Ausgestaltung wird eine Heizeinrichtung für eine Komponente der Windenergieanlage aktiviert, falls die ermittelte Vereisungsgefahr ein vorgegebenes Maß überschreitet. Damit wird einer Vereisung entgegengewirkt. Bei der Heizeinrichtung kann es sich beispielsweise um eine Rotorblattheizung handeln. Die Heizeinrichtung kann insbesondere elektrisch betrieben sein. Eine andere Möglichkeit, auf die Vereisungsgefahr zu reagieren, besteht darin, die Windenergieanlage abzuschalten. Durch diese einfache Maßnahme kommt es zwar zu Ertragseinbußen, aber eine Schädigung der Anlage durch Vereisung oder eine Gefährdung von Personen in der Nähe der Windenergieanlage durch herabfallendes Eis kann verhindert werden. Diese Lösung bietet sich insbesondere für Standorte an, an denen es nur sehr selten zu einer Vereisungsgefahr kommt.

Die oben angegebene Aufgabe wird ebenfalls gelöst durch die Windenergieanlage mit den Merkmalen des Anspruchs 12. Vorteilhafte Ausgestaltungen sind in den sich anschließenden Unteransprüchen angegeben.

Die Windenergieanlage hat einen Rotor, der mindestens ein eine Rotorfläche überstreichendes Rotorblatt aufweist, und eine Einrichtung zur Ermittlung einer Vereisungsgefahr, die folgendes aufweist:
- eine Lichtquelle, die so angeordnet ist, dass sie einen Beleuchtungsstrahl auf die Rotorfläche richtet,
- einen Lichtdetektor, der so angeordnet ist, dass er zurückgeworfene Anteile des Beleuchtungsstrahls erfasst,
- eine Steuerung, die mit dem Lichtdetektor verbunden und dazu ausgebildet ist, auf Grundlage der erfassten Lichtintensitäten eine Vereisungsgefahr zu ermitteln und dabei mindestens eine erste Lichtintensität und mindestens eine zweite Lichtintensität zu berücksichtigen, wobei die erste Lichtintensität von dem mindestens einem Rotorblatt zurückgeworfenes Licht umfasst und die zweite Lichtintensität kein von dem mindestens einen Rotorblatt zurückgeworfenes Licht umfasst.

Zur Erläuterung der Merkmale und Vorteile der Windenergieanlage wird auf die vorstehenden Erläuterungen des erfindungsgemäßen Verfahrens verwiesen, die entsprechend gelten. Die Windenergieanlage ist insbesondere zur Ausführung des erfindungsgemäßen Verfahrens vorgesehen. Durch die Erfassung von Lichtintensitäten und die Verwendung korrespondierender Signale in einer Steuerung bei der Ermittlung der Vereisungsgefahr kann die Genauigkeit bei der Ermittlung der Vereisungsgefahr auf einfache Weise verbessert werden. Der Lichtdetektor kann zum Beispiel ein Halbleiterdetektor sein, etwa ein CCD (charge coupled device) oder eine Fotozelle. Lichtquelle und Lichtdetektor sind in der Regel auf derselben Seite der Rotorfläche angeordnet.

In einer Ausgestaltung ist die Lichtquelle eine Laserlichtquelle. Laserlicht ist für ein robustes Messsystem geeignet, da Hintergrundrauschen einfach unterdrückt werden kann. Es braucht lediglich eine Wellenlänge, nämlich die des Lasers, durch den Lichtdetektor erfasst zu werden. Andere Frequenzen können ausgeblendet/nicht erfasst oder herausgefiltert werden.

In einer Ausgestaltung ist die Lichtquelle und/oder der Lichtdetektor im Bereich einer Gondel der Windenergieanlage angeordnet. Dadurch ist es besonders einfach möglich, die Messanordnung zu installieren und zu warten oder eine bestehende Windenergieanlage nachzurüsten.

In einer Ausgestaltung ist die Windenergieanlage zur Ausführung des Verfahrens in einer oder mehrerer der vorstehend beschriebenen Ausgestaltungen ausgebildet. Damit ist gemeint, dass die jeweilige Komponente der Windenergieanlage, insbesondere das Rotorblatt, die Lichtquelle, der Lichtdetektor und/oder die Steuerung, wie im Zusammenhang mit den entsprechenden Verfahrensschritten erläutert ausgebildet ist. Beispielsweise kann die Lichtquelle so angeordnet sein, dass der Beleuchtungsstrahl auf den oben genannten besonderen Bereich der Rotorfläche gerichtet ist, oder die Lichtquelle und/oder der Lichtdetektor können einen der oben hervorgehobenen Spektralbereiche aufweisen, und/oder ein Oberflächenabschnitt des mindestens einen Rotorblatts, auf den der Beleuchtungsstrahl auftrifft, kann mit den vorstehend erläuterten, besonderen optischen Eigenschaften versehen sein. In anderen Ausgestaltungen kann die Steuerung dazu eingerichtet sein, die vorstehend erläuterten Auswertungsschritte auszuführen, usw.

Nachfolgend wird die Erfindung anhand eines in den Figuren dargestellten Ausführungsbeispiels näher erläutert. Es zeigen:
- Fig. 1: eine erfindungsgemäße Windenergieanlage in einer schematischen Darstellung,
- Fig. 2: Einzelheiten der Lichtquelle und des Lichtdetektors aus Fig. 1 in einer schematischen Darstellung,
- Fig. 3: zwei Diagramme zu erfassten Lichtintensitäten, nämlich einmal bei relativ geringer Rückstreuung in der Atmosphäre (a), einmal bei relativ starker Rückstreuung in der Atmosphäre (b).

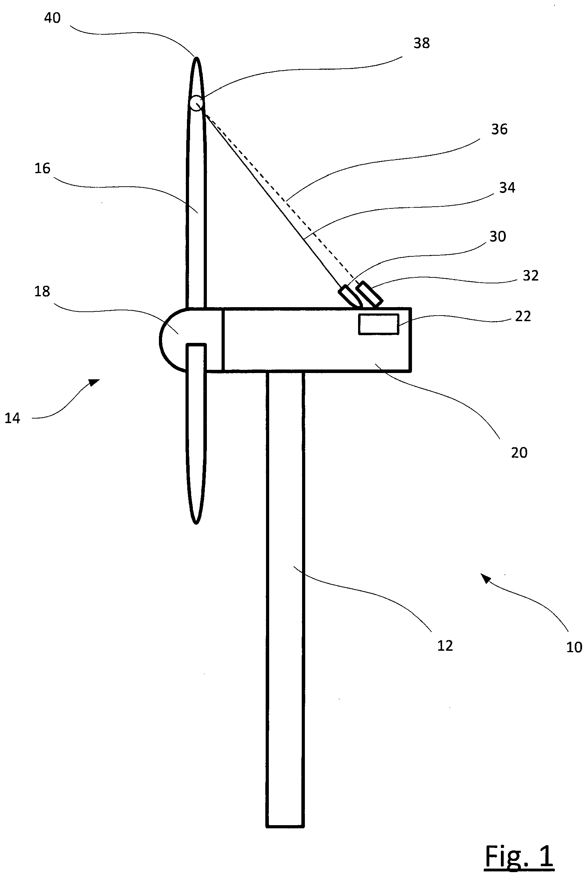

Figur 1 zeigt schematisch vereinfacht eine erfindungsgemäße Windenergieanlage 10, die einen Turm 12, eine Gondel 20 und einen Rotor 14 mit im Wesentlichen horizontaler Achse, drei Rotorblättern 16 und einer Rotornabe 18 aufweist.

Außerdem hat die Windenergieanlage 10 eine Einrichtung zur Ermittlung einer Vereisungsgefahr mit einer Lichtquelle 30, einem Lichtdetektor 32 und einer Steuerung 22. Lichtquelle 30 und Lichtdetektor 32 sind mit der Steuerung 22 verbunden. Die Steuerung 22 kann eine eigenständige elektronische Steuerung sein oder Teil einer zentralen Betriebsführung der Windenergieanlage. Lichtquelle 30 und Lichtdetektor 32 sind auf der Gondel 20 angeordnet, im dargestellten Beispiel im hinteren Drittel der Gondel 20.

Die drei Rotorblätter 16 überstreichen bei Rotation um die Rotorachse eine nicht eingezeichnete, kreisförmige Rotorfläche. Die Lichtquelle 30 ist so angeordnet, dass ein von ihr ausgestrahlter Beleuchtungsstrahl 34 einen Bereich 38 innerhalb der Rotorfläche beleuchtet. Dieser befindet sich im Beispiel ungefähr 1 m bis 10 m unterhalb eines höchsten Punkts 40 der Rotorfläche. Der Lichtdetektor 32 ist so angeordnet, dass sein Detektionsbereich mindestens teilweise innerhalb des beleuchteten Bereichs 38 angeordnet ist oder idealerweise in Form und Größe im Wesentlichen mit diesem zusammenfällt.

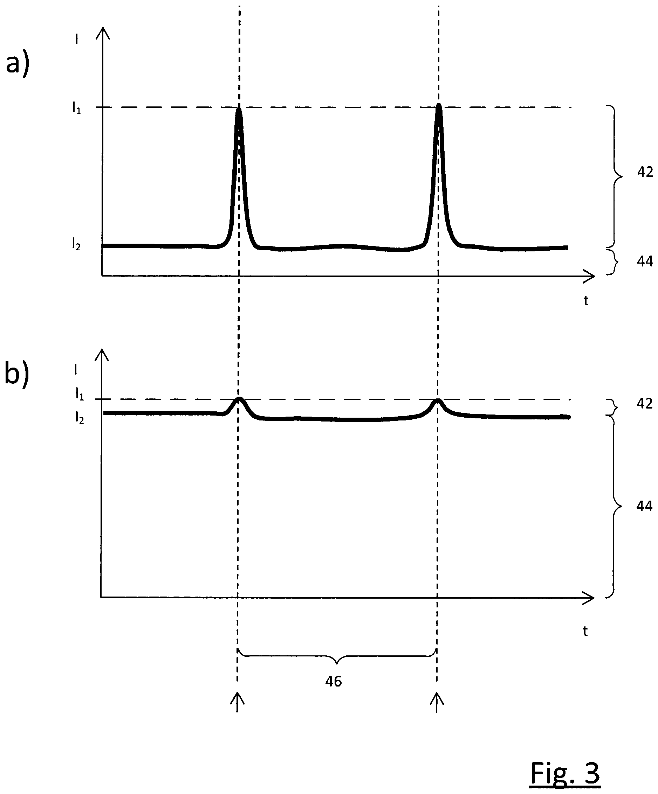

Befindet sich eines der Rotorblätter 16 innerhalb des beleuchteten Bereichs 38, wird ein Teil des Beleuchtungsstrahls 34 an der Oberfläche dieses Rotorblatts 16 in Richtung zu dem Lichtdetektor 32 zurückgeworfen. Unabhängig von der Stellung des Rotors 14 wird stets ein weiterer Teil des Beleuchtungsstrahls 34 an Partikeln in der Luft, insbesondere in Form von Wassertröpfchen oder Schnee, zurückgeworfen. Befindet sich gerade ein Rotorblatt 16 in dem beleuchteten Bereich 38, bilden diese beiden zurückgeworfenen Teile des Beleuchtungsstrahls gemeinsam den zurückgeworfenen Anteil 36. Der Lichtdetektor erfasst dann eine erste Lichtintensität I₁ (siehe Fig. 3).

Befindet sich gerade kein Rotorblatt 16 in dem beleuchteten Bereich 38, entfällt der von dem Rotorblatt 16 zurückgeworfene Teil des Beleuchtungsstrahls, und der zurückgeworfene Anteil 36 rührt lediglich von der Rückstreuung in der Luft her. Dementsprechend erfasst der Lichtdetektor 32 eine zweite Lichtintensität I₂ (siehe Fig. 3).

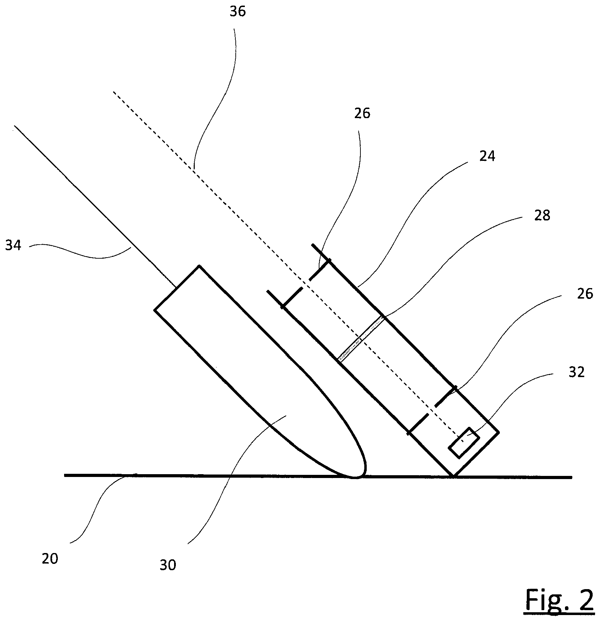

In der Fig. 2 sind die Lichtquelle 30 und der Lichtdetektor 32 vergrößert dargestellt. Die Lichtquelle 30 ist ein augensicherer IR-Laser, z.B. ein Festkörperlaser oder eine Laserdiode. Der Lichtdetektor 32 kann ein Halbleiterdetektor, z.B. ein CCD-Sensor, oder eine Photozelle sein. Er erfasst durch ein lichtdichtes Gehäuse 24 und eine Anordnung von Kollimatorblenden 26 mit einem definierten Öffnungswinkel Licht, das von der Lichtquelle 30 ausgestrahlt und dann zurückgeworfen wurde.

Zur Unterdrückung von Tageslicht und/oder weiteren Störquellen wie z.B. Licht eines Gefahrenfeuers ist zwischen den beiden Kollimatorblenden 26 ein Notch-Filter 28 angeordnet. Das Notch-Filter 28 lässt nur Lichtwellenlängen passieren, auf deren Basis die Lichtintensitätserfassung mit dem Lichtdetektor 32 erfolgen soll, und ist auf das von der Lichtquelle 30 ausgestrahlte Licht abgestimmt.

Die Figuren 3a) und 3b) zeigen beispielhaft den Verlauf der mit dem Lichtdetektor erfassten Lichtintensitäten über die Zeit. Fig. 3a) zeigt zwei ausgeprägte Signalspitzen mit einer ersten Lichtintensität I₁. Diese Signalspitzen treten mit einer Periode 46 auf und werden während des Durchlaufs der einzelnen Rotorblätter 16 durch den beleuchteten Bereich 38 erzeugt, wenn ein maximaler Anteil des Beleuchtungsstrahls 34 zurückgeworfen wird. Zwischen den Signalspitzen befindet sich gerade keines der Rotorblätter 16 in dem beleuchteten Bereich 38 und es wird die annähernd konstante, zweite Lichtintensität I₂ erfasst. Eine Zerlegung der Lichtintensitäten in einen zeitlich konstanten Anteil 44, der der zweiten Lichtintensität I₂ entspricht, und einen periodischen Anteil mit einer Amplitude 42, die der Differenz aus erster Lichtintensität I₁ und zweiter Lichtintensität I₂ entspricht, ist ebenfalls in der Fig. angedeutet. Man erkennt, dass die Lichtintensität I₁ um ein Vielfaches größer ist als die Lichtintensität I₂. Dies bedeutet, dass die Intensität des von der Luft bzw. den darin enthaltenen Teilchen zurückgeworfenen Anteils des Beleuchtungsstrahls 34 wesentlich geringer ist als die Intensität des vom Rotorblatt 16 zurückgeworfenen Anteils. Daraus kann geschlossen werden, dass selbst im oberen Bereich der Rotorfläche keine nennenswerte Wolken- oder Schneefalldichte vorliegt und die Vereisungsgefahr entsprechend gering ist.

In der Figur 3b) ist das Verhältnis aus zweiter Lichtintensität I₂ und erster Lichtintensität I₁ geringer; die Signalspitzen sind wesentlich schwächer ausgeprägt. Die Amplitude 42 des periodischen Anteils der Lichtintensitäten beträgt nur etwa ein Zehntel des Betrags des zeitlich konstanten Anteils 44. Auch die Differenz zwischen den beiden Lichtintensitäten I₂ und I₁ ist kleiner als in der Situation der Fig. 3a). Diese Situation ist typisch für eine hohe Wolken- oder Schneefalldichte im Bereich zwischen dem Rotorblatt und der aus der Lichtquelle 30 und dem Lichtdetektor 32 bestehenden Messanordnung. In diesem Fall wird ein Großteil des Beleuchtungsstrahls 34 vor Erreichen der Rotorfläche zurückgeworfen, was zu einer relativ großen zweiten Lichtintensität I₂ führt. Die Lichtintensität I₂ ist in der Regel größer als in der in Fig. 3a) dargestellten Situation. Außerdem wird der durch die Rückstreuung auf dem Weg von der Lichtquelle 30 zur Rotorfläche bereits geschwächte Beleuchtungsstrahl 34 nach Rückstreuung oder Reflexion am Rotorblatt 16 auf dem Rückweg zu dem Lichtdetektor 32 weiter geschwächt. Bei entsprechenden Temperaturbedingungen liegt wegen der hohen Wolken- oder Schneefalldichte eine höhere Vereisungsgefahr vor.

### Liste der verwendeten Bezugszeichen

- 10: Windenergieanlage
- 12: Turm
- 14: Rotor
- 16: Rotorblatt
- 18: Rotornabe
- 20: Gondel
- 22: Steuerung
- 24: Gehäuse
- 26: Kollimatorblende
- 28: Notch-Filter
- 30: Lichtquelle
- 32: Lichtdetektor
- 34: Beleuchtungsstrahl
- 36: zurückgeworfenes Licht
- 38: beleuchteter Bereich
- 40: höchster Punkt der Rotorfläche
- 42: periodischer Anteil
- 44: zeitlich konstanter Anteil
- 46: Periode
- I₁: erste Lichtintensität
- I₂: zweite Lichtintensität

## Patentansprüche

1. Verfahren zum Betreiben einer Windenergieanlage (10), die einen Rotor (14) mit mindestens einem eine Rotorfläche überstreichenden Rotorblatt (16) aufweist, mit den folgenden Schritten:
• Richten eines Beleuchtungsstrahls (34) auf die Rotorfläche,
• Erfassen von Lichtintensitäten von zurückgeworfenen Anteilen (36) des Beleuchtungsstrahls (34), wobei eine erste Lichtintensität (I₁) von dem mindestens einen Rotorblatt (16) zurückgeworfenes Licht umfasst und eine zweite Lichtintensität (I₂) kein von dem mindestens einen Rotorblatt (16) zurückgeworfenes Licht umfasst, sondern von der Rückstreuung des Beleuchtungsstrahls (34) in der Luft hervorgerufen wird,
• Ermitteln einer Vereisungsgefahr auf Grundlage der erfassten Lichtintensitäten.

2. Verfahren nach Anspruch 1, **dadurch gekennzeichnet, dass** der Beleuchtungsstrahl (34) auf einen Bereich (38) der Rotorfläche gerichtet ist, der weniger als ein Viertel des Rotordurchmessers unterhalb eines höchsten Punkts (40) der Rotorfläche angeordnet ist.

3. Verfahren nach Anspruch 1 oder 2, **dadurch gekennzeichnet, dass** der Beleuchtungsstrahl (34) Licht nur in einem Spektralbereich mit einer Bandbreite von 200 nm oder weniger und/oder mit Wellenlängen außerhalb des sichtbaren Bereichs ausstrahlt und/oder dass nur Lichtintensitäten in einem Spektralbereich mit einer Bandbreite von 200 nm oder weniger und/oder mit Wellenlängen außerhalb des sichtbaren Bereichs erfasst werden.

4. Verfahren nach einem der Ansprüche 1 bis 3, **dadurch gekennzeichnet, dass** der Beleuchtungsstrahl (34) kegelförmig ist.

5. Verfahren nach einem der Ansprüche 1 bis 4, **dadurch gekennzeichnet, dass** die erste Lichtintensität (I₁) durch diffuse Rückstreuung und/oder Reflexion des Lichts des Beleuchtungsstrahls (34) an einer Oberfläche des mindestens einen Rotorblatts (16) hervorgerufen wird, wobei die Oberfläche von den benachbarten Oberflächen des mindestens einen Rotorblatts (16) abweichende optische Eigenschaften aufweist.

6. Verfahren nach einem der Ansprüche 1 bis 5, **dadurch gekennzeichnet, dass** das von dem mindestens einen Rotorblatt (16) zurückgeworfene Licht (36) durch diffuse Rückstreuung des Beleuchtungsstrahls (34) an einer bzw. der Oberfläche des mindestens einen Rotorblatts (16) hervorgerufen wird.

7. Verfahren nach einem der Ansprüche 1 bis 6, **dadurch gekennzeichnet, dass** die Lichtintensitäten kontinuierlich erfasst und zur Auswertung in einen zeitlich konstanten Anteil (44) und einen periodischen Anteil (42) zerlegt werden.

8. Verfahren nach Anspruch 7, **dadurch gekennzeichnet, dass** bei der Zerlegung in den zeitlich konstanten Anteil (44) und den periodischen Anteil eine Rotordrehzahl und/oder ein Rotordrehwinkel berücksichtigt werden.

9. Verfahren nach einem der Ansprüche 7 oder 8, **dadurch gekennzeichnet, dass** die Vereisungsgefahr bestimmt wird auf Grundlage einer Differenz oder eines Verhältnisses zwischen dem Betrag der Amplitude (42) des periodischen Anteils und dem Betrag des zeitlich konstanten Anteils (44).

10. Verfahren nach einem der Ansprüche 1 bis 9, **dadurch gekennzeichnet, dass** eine Außenlufttemperatur, eine lokale Oberflächentemperatur einer Komponente der Windenergieanlage (10), eine Temperatur innerhalb des mindestens einen Rotorblatts (16), eine Temperatur in einer Gondel (20) der Windenergieanlage (10), eine Temperatur in einer Nabe (18) der Windenergieanlage (10), eine Temperatur in einem Turm (12) der Windenergieanlage (10), eine Luftfeuchte, ein Taupunkt, ein Frostpunkt, eine Sichtweite, eine Wolkenhöhe und/oder ein Luftdruck bei der Ermittlung der Vereisungsgefahr berücksichtigt wird.

11. Verfahren nach einem der Ansprüche 1 bis 10, **gekennzeichnet durch** den weiteren Schritt:
• Aktivieren einer Heizeinrichtung für eine Komponente der Windenergieanlage (10), falls die ermittelte Vereisungsgefahr ein vorgegebenes Maß überschreitet.

12. Windenergieanlage (10) mit einem Rotor (14), der mindestens ein eine Rotorfläche überstreichendes Rotorblatt (16) aufweist, und einer Einrichtung zur Ermittlung einer Vereisungsgefahr, die folgendes aufweist:
• eine Lichtquelle (30), die so angeordnet ist, dass sie einen Beleuchtungsstrahl (34) auf die Rotorfläche richtet,
• einen Lichtdetektor (32), der so angeordnet ist, dass er zurückgeworfene Anteile des Beleuchtungsstrahls (34) erfasst, und
• eine Steuerung (22), die mit dem Lichtdetektor (32) verbunden ist, **dadurch gekennzeichnet, dass**
• die Steuerung dazu ausgebildet ist, auf Grundlage der erfassten Lichtintensitäten eine Vereisungsgefahr zu ermitteln und dabei mindestens eine erste Lichtintensität (I₁) und mindestens eine zweite Lichtintensität (I₂) zu berücksichtigen, wobei die erste Lichtintensität (I₁) von mindestens einem Rotorblatt (16) zurückgeworfenes Licht (36) umfasst und die zweite Lichtintensität (I₂) kein von dem mindestens einen Rotorblatt (16) zurückgeworfenes Licht umfasst, sondern von der Rückstreuung des Beleuchtungsstrahls (34) in der Luft hervorgerufen wird.

13. Windenergieanlage (10) nach Anspruch 12, **dadurch gekennzeichnet, dass** die Lichtquelle (30) eine Laserlichtquelle ist.

14. Windenergieanlage (10) nach Anspruch 12 oder 13, **dadurch gekennzeichnet, dass** die Lichtquelle (30) und/oder der Lichtdetektor (32) im Bereich einer Gondel (20) der Windenergieanlage (10) angeordnet ist.

15. Windenergieanlage (10) nach einem der Ansprüche 12 bis 14, **dadurch gekennzeichnet, dass** die Windenergieanlage (10) zur Ausführung des Verfahrens nach einem der Ansprüche 1 bis 11 ausgebildet ist.

## Claims

1. A method for operating a wind turbine (10) that has a rotor (14) with at least one rotor blade (16) passing over a rotor area, having the following steps:
• directing a lighting beam (34) toward the rotor area,
• detecting the light intensities of returned shares (36) of the lighting beam (34), wherein a first light intensity (I₁) comprises light reflected back by the at least one rotor blade (16), and a second light intensity (I₂) comprises none of the light reflected back by the at least one rotor blade (16), but rather is caused by the backscatter from the lighting beam (34) in the air,
• determining an icing hazard based on the detected light intensities.

2. The method according to claim 1, **characterized in that** the lighting beam (34) is directed toward a region (38) of the rotor area that is arranged less than a quarter of the rotor diameter below a highest point (40) of the rotor area.

3. The method according to claim 1 or 2, **characterized in that** the lighting beam (34) only emits light within a spectral range at a bandwidth of 200 nm or less, and/or at wavelengths outside of the visible range, and/or only light intensities are detected within a spectral range at a bandwidth of 200 nm or less, and/or at wavelengths outside of the visible range.

4. The method according to one of claims 1 to 3, **characterized in that** the lighting beam (34) is conical.

5. The method according to one of claims 1 to 4, **characterized in that** the first light intensity (I₁) is caused by diffuse backscatter and/or reflection of the light of the lighting beam (34) at a surface of the at least one rotor blade (16), wherein the surface of the adjacent surfaces of the at least one rotor blade (16) has deviating optical properties.

6. The method according to one of claims 1 to 5, **characterized in that** the light (36) reflected back by the at least one rotor blade (16) is caused by diffuse backscatter of the lighting beam (34) at a, or respectively the, surface of the at least one rotor blade (16).

7. The method according to one of claims 1 to 6, **characterized in that** the light intensities are detected continuously and divided into a constant share (44) and periodic share (42) over time for evaluation.

8. The method according to claim 7, **characterized in that** a rotor speed and/or rotor angle of rotation are taking into consideration in the division into the constant share (44) and the periodic share over time.

9. The method according to one of claims 7 or 8, **characterized in that** the icing hazard is determined based on a difference or relationship between the amount of the amplitude (42) of the periodic share, and the amount of the constant share (44) over time.

10. The method according to one of claims 1 to 9, **characterized in that** an outside air temperature, a local surface temperature of a component of the wind turbine (10), a temperature within the at least one rotor blade (16), a temperature in a nacelle (20) of the wind turbine (10), a temperature in a hub (18) of the wind turbine (10), a temperature in a tower (12) of the wind turbine (10), an air humidity, a dew point, a frost point, a range of vision, a cloud height and/or an air pressure are taken into consideration in determining the icing hazard.

11. The method according to one of the claims 1 to 10, **characterized by** the additional steps:
• activation of a heating apparatus for a component of the wind turbine (10) if the determined icing hazard exceeds a predetermined level.

12. A wind turbine (10) with a rotor (14) that has at least one rotor blade (16) passing over a rotor area, and an apparatus for determining an icing hazard that has the following:
• a light source (30) that is arranged such that it directs an lighting beam (34) toward the rotor area,
• a light detector (32) that is arranged such that it detects the reflected shares of the lighting beam (34), and
• a control (22) that is connected to the light detector (32), **characterized in that**
• the control is designed to determine an icing hazard based on the detected light intensities and in so doing take into account at least one first light intensity (I₁) and at least one second light intensity (I₂), wherein the first light intensity (I₁) comprises a light (36) reflected back by at least one rotor blade (16), and the second light intensity (I₂) comprises none of the light reflected back by the at least one rotor blade (16), but rather the backscatter from the lighting beam (34) in the air.

13. The wind turbine (10) according to claim 12, **characterized in that** the light source (30) is a laser light source.

14. The wind turbine (10) according to claim 12 or 13, **characterized in that** the light source (30) and/or the light detector (32) are arranged in the region of a nacelle (20) of the wind turbine (10).

15. The wind turbine (10) according to one of claims 12 to 14, **characterized in that** the wind turbine (10) is designed to perform the method according to one of claims 1 to 11.

## Revendications

1. Procédé d'exploitation d'une éolienne (10) comportant un rotor (14) avec au moins une pale de rotor (16) balayant une surface de rotor, comprenant les étapes suivantes :
• pointage d'un faisceau d'éclairage (34) sur la surface du rotor,
• détection d'intensités lumineuses de composantes réfléchies (36) du faisceau d'éclairage (34), dans lequel une première intensité lumineuse (I₁) comporte de la lumière réfléchie par ladite au moins une pale de rotor (16) et une deuxième intensité lumineuse (I₂) ne comporte pas de lumière réfléchie par ladite au moins une pale de rotor (16), mais est générée par la rétrodiffusion du faisceau d'éclairage (34) dans l'air,
• détermination d'un danger de givrage sur base des intensités lumineuses détectées.

2. Procédé selon la revendication 1, **caractérisé en ce que** le faisceau d'éclairage (34) est dirigé sur une zone (38) de la surface du rotor qui se trouve à moins d'un quart du diamètre du rotor sous le point le plus élevé (40) de la surface du rotor.

3. Procédé selon la revendication 1 ou 2, **caractérisé en ce que** la lumière du faisceau d'éclairage (34) rayonne uniquement dans un domaine spectral avec une bande passante inférieure ou égale à 200 nm et/ou avec des longueurs d'onde non comprises dans le domaine visible, et/ou **en ce que** ne sont détectées que des intensités lumineuses dans un domaine spectral avec une bande passante inférieure ou égale à 200 nm et/ou avec des longueurs d'onde non comprises dans le domaine visible.

4. Procédé selon l'une des revendications 1 à 3, **caractérisé en ce que** le faisceau d'éclairage (34) présente une forme conique.

5. Procédé selon l'une des revendications 1 à 4, **caractérisé en ce que** la première intensité lumineuse (I₁) est générée par rétrodiffusion diffuse et/ou par réflexion de la lumière du faisceau d'éclairage (34) sur une surface de ladite au moins une pale de rotor (16), dans lequel la surface présente des propriétés optiques divergentes des surfaces adjacentes de ladite au moins une pale de rotor (16).

6. Procédé selon l'une des revendications 1 à 5, **caractérisé en ce que** la lumière réfléchie (36) par ladite au moins une pale de rotor (16) est générée par rétrodiffusion diffuse du faisceau d'éclairage (34) sur une surface, ou respectivement sur la surface de ladite au moins une pale de rotor (16).

7. Procédé selon l'une des revendications 1 à 6, caractérisé en que les intensités lumineuses sont continuellement détectées et décomposées pour leur évaluation en une composante constante dans le temps (44) et une composante périodique (42).

8. Procédé selon la revendication 7, **caractérisé en ce qu'**une vitesse de rotor et/ou un angle de rotor sont pris en compte pour la décomposition en ladite composante constante dans le temps (44) et ladite composante périodique.

9. Procédé selon l'une des revendications 7 ou 8, **caractérisé en ce que** le danger de givrage est déterminé sur base d'une différence ou d'un rapport entre la grandeur de l'amplitude (42) de la composante périodique et la grandeur de la composante constante dans le temps (44).

10. Procédé selon l'une des revendications 1 à 9, **caractérisé en ce qu'**une température de l'air extérieur, une température locale en surface d'une composante de l'éolienne (10), une température présente dans ladite au moins une pale de rotor (16), une température dans une nacelle (20) de l'éolienne (10), une température dans un moyeu (18) de l'éolienne (10), une température dans un mât (12) de l'éolienne (10), une humidité de l'air, un point de rosée, un point de gel, une visibilité, une hauteur du plafond nuageux et/ou une pression atmosphérique sont pris en compte pour la détermination du danger de givrage.

11. Procédé selon l'une des revendications 1 à 10, **caractérisé par** l'étape additionnelle suivante :
activation d'un dispositif de chauffage pour un composant de l'éolienne (10), dans le cas où le danger de givrage déterminé dépasse une valeur prédéterminée.

12. Éolienne (10) avec un rotor (14) comportant au moins une pale de rotor (16) balayant une surface de rotor et un dispositif pour déterminer un danger de givrage, comprenant les éléments suivants :
• une source lumineuse (30) agencée de manière à orienter un faisceau d'éclairage (34) sur la surface du rotor,
• un détecteur de lumière (32) agencé de telle sorte qu'il détecte des composantes réfléchies du faisceau d'éclairage (34), et
• une commande (22) qui est connectée au détecteur de lumière (32), **caractérisée en ce que**
• la commande est constituée de manière à déterminer un danger de givrage sur base des intensités lumineuses détectées et à prendre aussi en compte au moins une première intensité lumineuse (I₁) et au moins une deuxième intensité lumineuse (I₂), dans laquelle la première intensité lumineuse (I₁) comporte de la lumière réfléchie (36) par au moins une pale de rotor (16) et la deuxième intensité lumineuse (I₂) ne comporte pas de lumière réfléchie par ladite au moins une pale de rotor (16), mais est générée par la rétrodiffusion du faisceau d'éclairage (34) dans l'air.

13. Éolienne (10) selon la revendication 12, **caractérisée en ce que** la source lumineuse (30) est une source de lumière laser.

14. Éolienne (10) selon la revendication 12 ou 13, caractérisée en que la source lumineuse (30) et/ou le détecteur de lumière (32) sont agencés dans la zone d'une nacelle (20) de l'éolienne (10).

15. Éolienne (10) selon l'une des revendications 12 à 14, **caractérisée en ce que** l'éolienne (10) est constituée pour la mise en oeuvre du procédé selon l'une des revendications 1 à 11.
